# FASCICULE DE BREVET EUROPEEN

(11) **EP 3 408 562 B1**
(45) Date de publication et mention de la délivrance du brevet: **07.10.2020**
(21) Numéro de dépôt: 17706529.9
(22) Date de dépôt: 13.01.2017
(51) Int. Cl.: F16H 57/025

(54) **SYSTÈME D'ACCOUPLEMENT AXIAL D'UN ARBRE MOTEUR SUR UN ARBRE DE TRANSMISSION**
SYSTEM ZUR AXIALEN KOPPLUNG EINER MOTORWELLE AN EINE ANTRIEBSWELLE
SYSTEM FOR AXIALLY COUPLING AN ENGINE SHAFT TO A DRIVE SHAFT

(30) Priorité: 26.01.2016 FR 1650613
(43) Date de publication de la demande: 05.12.2018
(73) Titulaire: Renault S.A.S., 92100 Boulogne-Billancourt (FR); NISSAN MOTOR CO., LTD., Yokohama-shi, Kanagawa 221-0023 (JP)
(72) Inventeur: DECAUX, Stéphane, 76000 Rouen (FR); MOTTE, Emmanuel, 76150 Saint Jean du Caronnay (FR)
(74) Mandataire: Rougemont, Bernard
(86) Numéro de dépôt international: PCT/FR2017/050083
(87) Numéro de publication internationale: WO 2017/129879

(56) Documents cités:
- EP-A1- 1 955 929
- EP-A1- 2 631 509
- DE-C1- 4 302 007

## Description

L'invention concerne l'accouplement axial d'un arbre moteur sur un arbre de transmission, comme révélé dans DE4302007C et correspondant au préambule de la revendication 1.

Plus précisément, elle a pour objet un système d'accouplement axial d'un arbre moteur tournant dans un carter de machine, sur un arbre de boîte de vitesses tournant dans un carter de boîte de vitesses.

La présente invention a également pour objet un groupe motopropulseur de véhicule hybride comportant un tel système d'accouplement.

Dans une application particulière, mais ne limitant pas la portée de l'invention, l'arbre moteur est un arbre de sortie de machine électrique, et l'arbre de transmission est un arbre d'entrée de réducteur, ou de boîte de vitesses, couplé à la machine électrique. Dans les véhicules électriques et hybrides, le centrage des moteurs électriques sur leur face d'accouplement à la transmission, exige un parfait alignement des arbres, dans un encombrement axial aussi réduit que possible. Pour offrir des prestations de niveau élevé, certains groupes motopropulseurs (GMP) hybrides comportent deux moteurs électriques, dont l'un au moins peut tourner à grande vitesse, jusqu'à par exemple 18 000 tours par minute. Pour que la puissance de la machine soit compatible avec la géométrie de l'accouplement, il faut que le guidage des arbres soit suffisamment précis, pour limiter les contraintes résiduelles dans les pièces tournantes, pour assurer la robustesse de l'accouplement, et pour réduire le bruit.

Dans un tel contexte, le parfait alignement axial de l'arbre moteur et de l'arbre de transmission lors de l'assemblage de la machine électrique et de son réducteur (ou de sa boîte de vitesses), est primordial. Sinon, la face d'accouplement de la machine n'est pas plaquée sur le réducteur, et il subsiste un jeu entre les deux organes. Dans ces conditions, la mise en contrainte des arbres lors du serrage des vis de couture de la face d'accouplement, n'est pas réalisée.

La présente invention vise à assurer un accouplement satisfaisant du point de vue de la cohésion et de l'intégrité de la structure, avec un moyen industriel d'assemblage à haute cadence, sans risque de bruyance ou de déformation ultérieure.

Dans ce but, elle prévoit d'introduire dans le système d'accouplement, une douille d'insertion d'une vis de calage des deux carters. La douille peut glisser dans l'un des carters en direction du deuxième, sous la poussée de la vis lors de son serrage, pour se plaquer contre ce dernier au niveau d'un plan de joint des carters, de manière à supprimer tout jeu entre les carters au niveau de ce plan de joint.

De préférence, la poussée de la vis intervient sur la douille, lorsque la tête de la vis entre en contact avec celle-ci.

Cette invention permet sur la durée :
- une bonne tenue mécanique des roulements, par suppression des contraintes résiduelles liées au montage,
- un assemblage sans perte de tension, ni risque de desserrage générant de la bruyance,
- un guidage de la machine électrique secondaire sans contraintes radiales sur l'arbre de la boîte de vitesse,
- une bonne étanchéité sur la face de contact entre la machine et la boîte au niveau du plan de joint, et
- une reprise d'effort au niveau de la vis de calage.

La présente invention sera mieux comprise à la lecture de la description suivante d'un mode de réalisation non limitatif de celle-ci, en se reportant aux dessins annexés, sur lesquels :
- la figure 1 est une vue extérieure d'un GMP hybride,
- la figure 2 illustre l'état de la technique,
- la figure 3 montre le système d'accouplement proposé, avant le vissage complet, et
- la figure 4 montre le même système après le vissage complet.

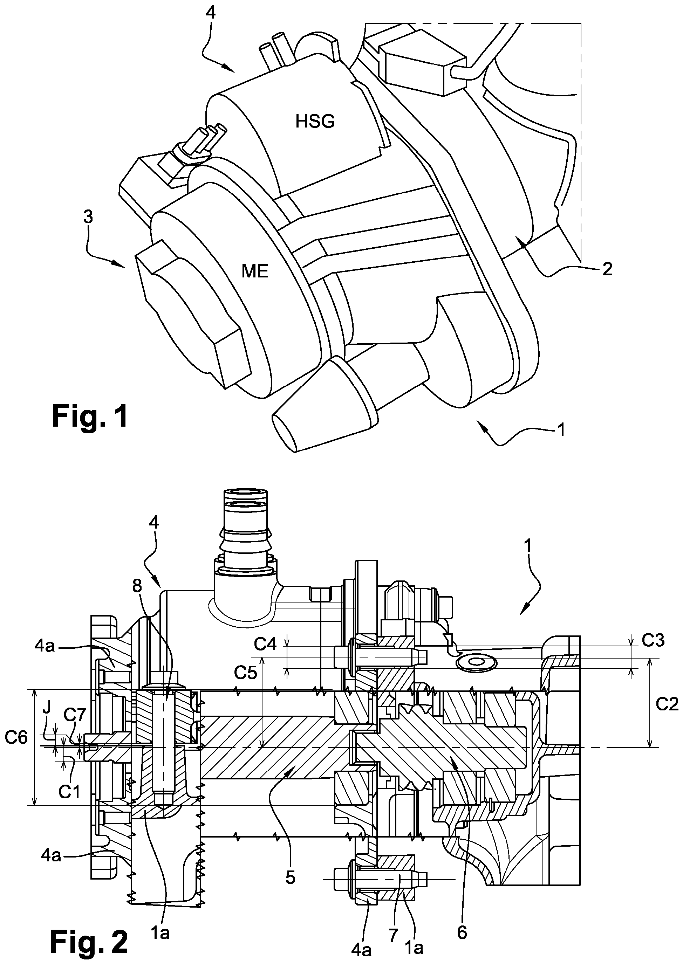

Sur la figure 1, on a représenté à titre d'exemple non limitatif, un GMP hybride regroupant sur une boîte de vitesse 1 accouplée à un moteur thermique 2, deux machines électriques 3, 4 dont une machine électrique principale ME (3) et une machine électrique secondaire (4) HSG (pour « *High-volt Start Generator* »)*,* dont l'accouplement sur la boîte de vitesse pose le problème d'alignement évoqué. La section partielle de la figure 2 montre les deux arbres concernés, à savoir l'arbre de sortie 5 de la machine 4, et l'arbre d'entrée 6 de la boîte ou du réducteur 1, avec son extrémité 12.

Dans cette architecture hybride, il n'y a pas d'embrayage, ni de synchroniseurs. Tous les passages de vitesses se font sous couple, grâce à un actionneur. Il n'y a pas de démarreur ni d'alternateur. La deuxième machine électrique HSG, par exemple de 400v, assure la fonction d'alterno-démarreur, mais aussi la synchronisation des passages de vitesses. Enfin, elle peut aussi servir d'appoint (« *boost* ») à la machine électrique principale ME. L'assemblage de la machine secondaire 4 sur la boîte 1 est particulièrement exigeant, pour pouvoir délivrer les forts couples demandés par toutes ces fonctions.

Comme indiqué sur la figure 2, la machine électrique secondaire 4 est fixée sur la boite de vitesse 1 par plusieurs vis 7, dites « *de couture* », qui assurent son placage (appui plan) sur celle-ci, et son centrage. L'arbre de boîte 6 est guidé par deux roulements 11, qui sont logés dans le carter 1a fermant la boîte 1. Dans l'exemple de la figure 2, l'alignement des deux arbres dépend de plusieurs pièces. La vis 8, dite « *de calage* », assure une fonction différente, de reprise de couple entre les carters 1a, et 4a, qui permet d'éviter une micro rotation de la machine sur son axe. La vis de calage 8 garantit un placage dynamique de la machine, en combinaison avec les autres vis 7, pour empêcher l'ouverture d'un jeu J au niveau du plan de joint mentionné sur la figure. Le jeu J résulte de l'accumulation de sept dispersions repérées sur le schéma au niveau des cotes C1 à C7.

Selon le tableau indicatif ci-dessous, la répartition est la suivante au niveau de chaque cote, pour un jeu total observé J, de 1,231 mm :

| Cotes | Dispersion mesurée (mm) |
|---|---|
| 1 | 0,5 |
| 2 | 0,008 |
| 3 | 0,028 |
| 4 | 0,028 |
| 5 | 0,08 |
| 6 | 0,015 |
| 7 | 0,5 |
| Jeu J | 1,231 |

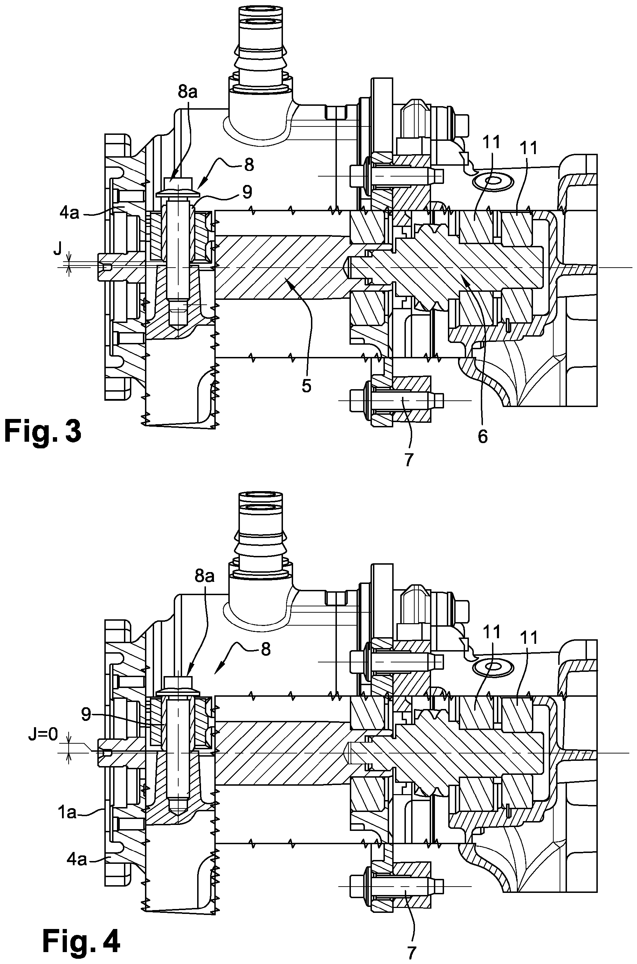

Sur les figures 3 et 4, montrant l'invention, on retrouve la même disposition générale que sur la figure 2. Mais conformément à l'invention, le système d'accouplement des arbres 5 et 6 comporte en plus une douille d'insertion 9. La vis de calage 8 et la douille 9 sont orientées transversalement au plan de joint des carters 4a, la. La douille 9 peut glisser dans l'un des carters (par exemple le carter 4a de la machine électrique 4 en direction du deuxième carter (dans ce cas, le carter la de la boîte de vitesses 1), sous la poussée de la vis de calage 8 lors de son serrage, pour se plaquer contre ce dernier au niveau d'un plan de joint, de manière à supprimer tout jeu entre les carters à ce niveau.

Dans ce mode de réalisation préféré de l'invention, la vis de calage 8 est engagée dans le carter 4a de la machine électrique 4 au travers de la douille 9. Sur la figure 3, avant le serrage de la vis 8, on voit encore le jeu J, au niveau du plan de joint. Sur la figure 3, après le serrage de la vis 9, le jeu est supprimé.

La douille 9 est montée glissante, dans le carter 4a avec un faible serrage, qui permet son maintien statique sur la machine 4. Lors du serrage de la vis 8, sa tête 8a entre en contact avec la douille. La poussée de la vis 8 s'exerce alors sur celle-ci.

A partir du contact de la tête de vis 8a sur la douille 9, la tension imposée par la vis 8a est transmise dans l'ensemble des carters. La douille se déplace alors axialement jusqu'au placage final des deux carters (figure 4). La vis de calage 8 coopère avec l'ensemble des vis de couture axiales 7. Après le placage de toutes les pièces, la tension de la vis 8 est transmise dans l'ensemble des carters, suivant le couple préconisé.

En conclusion, le système d'assemblage proposé s'ajuste par l'intermédiaire de la vis 8, qui assure simultanément le calage final des carters. La douille glissante 9 permet ce calage final, supprimant tout jeu entre les carters, qui pourrait détériorer l'assemblage, avec un risque de perte de tension dans le temps. Cet assemblage est assuré avec le concours des vis de couture 7. Le montage de la machine électrique secondaire et l'alignement des arbres 5 et 6, peuvent ainsi s'effectuer sans déformer l'arbre et impacter les roulements, lors du serrage des vis de couture et de calage.

Sans sortir du cadre de l'invention, la boîte de vitesses peut être une boîte de vitesse étagée multirapports, ou un réducteur mono-rapport.

Le groupe motopropulseur (GMP) concerné, peut être un GMP hybride comportant, outre un moteur thermique, une boîte de vitesses et au moins une machine électrique. Dans un tel groupe, l'alignement axial de l'arbre de sortie 5 de la machine électrique et d'un arbre d'entrée 6 de la boîte de vitesses 1, est assuré par le système d'accouplement décrit ci-dessus. Ce groupe peut notamment comporter deux machines électriques, dont une machine électrique principale et une machine électrique secondaire, montées sur la même boîte de vitesses.

## Revendications

1. Système d'accouplement axial d'un arbre moteur (5) tournant dans un carter (4a) d'une machine électrique (4), sur un arbre de boîte de vitesses (6) tournant dans un carter (1a) d'une boîte de vitesses (1), comportant un ensemble de vis (7) de couture axiales assurant le placage de la machine électrique (4) sur la boîte de vitesses, (1) **caractérisé en ce qu'**il comporte également une vis de calage (8) et une douille d'insertion (9) orientées transversalement au plan de joint des deux carters, la douille d'insertion pouvant glisser dans l'un des carters (4a) en direction du deuxième carter (1a) sous la poussée de la vis (8) lors de son serrage, en se plaquant contre ce dernier au niveau d'un plan de joint des carters, de manière à supprimer tout jeu entre les carters au niveau de ce plan de joint.

2. Système d'accouplement axial selon la revendication 1, **caractérisé en ce que** la poussée de la vis (8) intervient sur la douille (9) lorsque la tête de la vis (8a) entre en contact avec celle-ci.

3. Système d'accouplement selon la revendication 1, **caractérisé en ce que** l'arbre moteur (5) est un arbre de machine électrique (4).

4. Système d'accouplement selon la revendication 1, 2 ou 3, **caractérisée en ce que** la vis de calage (8) et la douille (9) sont orientées transversalement au plan de joint des carters (4a, la).

5. Système d'accouplement selon l'une des revendications précédentes, **caractérisé en ce que** la tension de la vis de placage (8) est transmise dans l'ensemble des carters (4a, la) après le placage de la douille (9), suivant le couple préconisé.

6. Système d'accouplement selon l'une des revendications précédentes, **caractérisé en ce que** la boîte de vitesses (1) est un réducteur mono-rapport.

7. Groupe motopropulseur comportant une boîte de vitesses et au moins une machine électrique (4), **caractérisé en ce que** l'alignement axial de l'arbre de sortie (5) de la machine électrique (4) et d'un arbre d'entrée (6) de la boîte de vitesses (1) est assuré par un système d'accouplement conforme à l'une des revendications précédentes.

8. Groupe motopropulseur hybride selon la revendication 7, **caractérisé en ce qu'**il comporte deux machines électriques (3, 4) montées sur la même boîte de vitesses (1).

9. Groupe motopropulseur selon la revendication 8, **caractérisé en ce qu'**il comporte deux machines électriques (3, 4), dont l'une est accouplée sur la boîte de vitesses (1) conformément à l'une des revendications précédentes.

## Patentansprüche

1. System zur axialen Kopplung einer Motorwelle (5), die in einem Gehäuse (4a) einer elektrischen Maschine (4) dreht, an eine Getriebewelle (6), die in einem Gehäuse (1a) eines Getriebes (1) dreht, das eine Einheit axialer Nahtschrauben (7) aufweist, die die Auflage der elektrischen Maschine (4) auf dem Getriebe (1) gewährleisten,
**dadurch gekennzeichnet, dass** es ebenfalls eine Einstellschraube (8) und eine Einführbuchse (9) aufweist, die quer zur Verbindungsebene der zwei Gehäuse ausgerichtet sind, wobei die Einführbuchse unter der Schubwirkung der Schraube (8) bei ihrem Anziehen in einem der Gehäuse (4a) in Richtung des zweiten Gehäuses (1a) gleiten kann, indem sie sich gegen dieses letztere im Bereich einer Verbindungsebene der Gehäuse andrückt, um jeden Spielraum zwischen den Gehäusen im Bereich dieser Verbindungsebene zu beseitigen.

2. System zur axialen Kopplung nach Anspruch 1, **dadurch gekennzeichnet, dass** die Schubwirkung der Schraube (8) auf die Buchse (9) stattfindet, wenn der Kopf der Schraube (8a) mit dieser in Kontakt kommt.

3. Kopplungssystem nach Anspruch 1, **dadurch gekennzeichnet, dass** die Motorwelle (5) eine Welle einer elektrischen Maschine (4) ist.

4. Kopplungssystem nach Anspruch 1, 2 oder 3, **dadurch gekennzeichnet, dass** die Einstellschraube (8) und die Buchse (9) quer zur Verbindungsebene der Gehäuse (4a, 1a) ausgerichtet sind.

5. Kopplungssystem nach einem der vorhergehenden Ansprüche, **dadurch gekennzeichnet, dass** die Spannung der Auflageschraube (8) in die Gesamtheit der Gehäuse (4a, la) nach dem Auflegen der Buchse (9) gemäß dem empfohlenen Drehmoment übertragen wird.

6. Kopplungssystem nach einem der vorhergehenden Ansprüche, **dadurch gekennzeichnet, dass** das Getriebe (1) ein einstufiges Untersetzungsgetriebe ist.

7. Antriebseinheit, die ein Getriebe und mindestens eine elektrische Maschine (4) aufweist, **dadurch gekennzeichnet, dass** die axiale Ausrichtung der Abtriebswelle (5) der elektrischen Maschine (4) und einer Antriebswelle (6) des Getriebes (1) von einem Kopplungssystem gemäß einem der vorhergehenden Ansprüche gewährleistet wird.

8. Hybride Antriebseinheit nach Anspruch 7, **dadurch gekennzeichnet, dass** sie zwei elektrische Maschinen (3, 4) aufweist, die auf das gleiche Getriebe (1) montiert sind.

9. Antriebseinheit nach Anspruch 8, **dadurch gekennzeichnet, dass** sie zwei elektrische Maschinen (3, 4) aufweist, von denen eine an das Getriebe (1) gemäß einem der vorhergehenden Ansprüche gekoppelt ist.

## Claims

1. System for the axial coupling of a motor shaft (5), rotating in a housing (4a) of an electric machine (4), to a gearbox shaft (6) rotating in a housing (1a) of a gearbox (1), comprising a set of axial stitching screws (7) that clamp the electric machine (4) on the gearbox (1), **characterized in that** it also comprises a set screw (8) and an insertion sleeve (9), these being oriented transversely to the plane of joining of the two housings, the insertion sleeve being able to slide in one of the housings (4a) in the direction of the second housing (1a) under the thrust force of the screw (8) during tightening thereof, being clamped against the latter at a plane of joining of the housings, so as to eliminate any play between the housings at this plane of joining.

2. Axial coupling system according to Claim 1, **characterized in that** the thrust force of the screw (8) acts on the sleeve (9) when the head of the screw (8a) enters into contact with said sleeve.

3. Coupling system according to Claim 1, **characterized in that** the motor shaft (5) is a shaft of an electric machine (4).

4. Coupling system according to Claim 1, 2 or 3, **characterized in that** the set screw (8) and the sleeve (9) are oriented transversely to the plane of joining of the housings (4a, la).

5. Coupling system according to one of the preceding claims, **characterized in that** the tension of the clamping screw (8) is transmitted into the assembly of the housings (4a, 1a) after the clamping of the sleeve (9) according to the recommended torque.

6. Coupling system according to one of the preceding claims, **characterized in that** the gearbox (1) is a single-ratio reduction gear.

7. Powertrain including a gearbox and at least one electric machine (4), **characterized in that** the axial alignment of the output shaft (5) of the electric machine (4) and an input shaft (6) of the gearbox (1) is assured by a coupling system according to one of the preceding claims.

8. Hybrid powertrain according to Claim 7, **characterized in that** it includes two electric machines (3, 4) mounted on the same gearbox (1).

9. Powertrain according to Claim 8, **characterized in that** it includes two electric machines (3, 4), one of which is coupled to the gearbox (1) according to one of the preceding claims.
